# EUROPEAN PATENT SPECIFICATION

(11) **EP 0 851 687 B1**
(45) Date of publication and mention of the grant of the patent: **10.08.2005**
(21) Application number: 97310623.0
(22) Date of filing: 24.12.1997
(51) Int. Cl.: H04N 9/64, H04N 17/04

(54) **Circuit for generating PAL chrominance signals**
Schaltung zur Erzeugung von PAL-Chrominanzsignalen
Circuit pour générer des signaux de chrominance PAL

(30) Priority: 27.12.1996 JP 35053696; 21.01.1997 JP 894497; 25.02.1997 JP 4110597
(43) Date of publication of application: 01.07.1998
(73) Proprietor: SANYO ELECTRIC Co., Ltd., Moriguchi-shi, Osaka 570 (JP)
(72) Inventor: Kawata, Junichi, Ora-gun, Gunma-ken (JP); Naito, Masayuki, Sano-shi, Tochigi-ken (JP)
(74) Representative: Cross, Rupert Edward Blount

(56) References cited:
- EP-A- 0 071 745
- EP-A- 0 319 431
- US-A- 4 139 863
- US-A- 4 149 178
- US-A- 4 229 760
- US-A- 4 464 676

## Description

### BACKGROUND OF THE INVENTION

### FIELD OF THE INVENTION

The present invention relates to a circuit for generating chrominance signals for an on-screen display for use in a home VCR or the like, and more particularly to a circuit for generating PAL chrominance signals for coloring a frame produced inside.

### DESCRIPTION OF THE RELATED ART

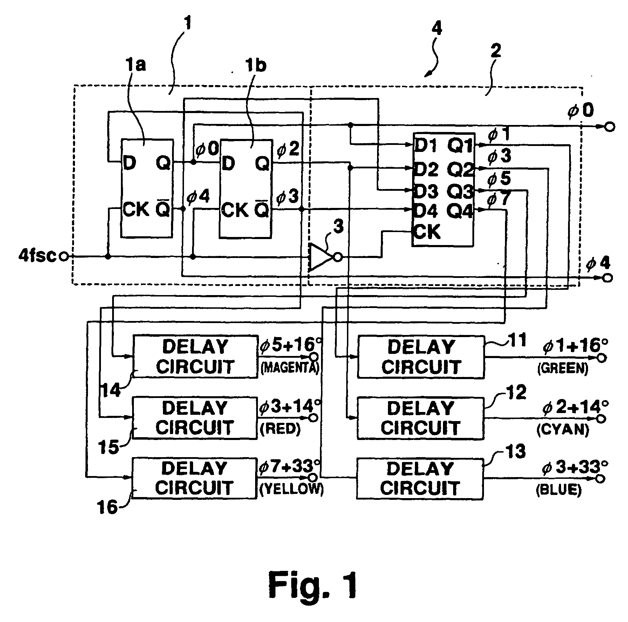

The structure of a circuit for generating chrominance signals for use in a frame produced inside as shown in Fig. 1 has been known. Referring to Fig. 1, reference numeral 4 represents a circuit for generating a 45°-phase-signal, the circuit 4 having a frequency divider 1, a shifting circuit 2 and delay circuits 11, 12, 13, 14, 15 and 16. The divider 1 has flip-flops la and lb to divide four times sub-carrier 4fsc (in a case of NTSC, fsc is 3.58 MHz) having a frequency which is four times the frequency of a color burst signal by four. The shifting circuit (2) performs a process for shifting the phase by using an output signal supplied from the divider 1 through an inverter (3) as a clock.

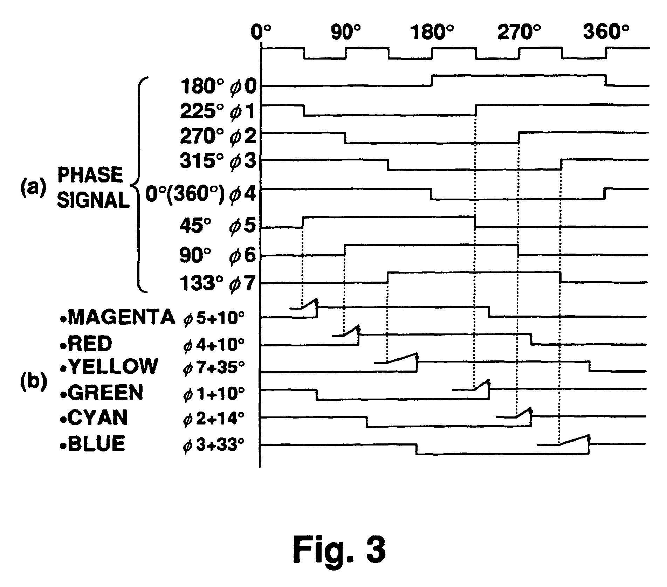

The divider (1) and the shifting circuit (2) generate a variety of phase signals. Specifically, phase signals φ0 to φ 7 shown in Fig. 3 are generated. Among the foregoing phase signals, six signals which are necessary for required colors are supplied to the corresponding delay circuits (11) to (16). Each delay circuit performs a delaying process to obtain a desired color so that the phase adjustment is performed. Waveforms (b) shown in Fig. 3 are waveforms of delayed signals.

As described above, the circuit shown in Fig. 1 is arranged in such a manner as to generate chrominance signals each having a phase angle of 45°, obtained by dividing the signals each having the frequency of 4fsc. Moreover, the foregoing circuit delays the phases in such a manner that the chrominance signals form required colors. In that manner, chrominance signals can be generated.

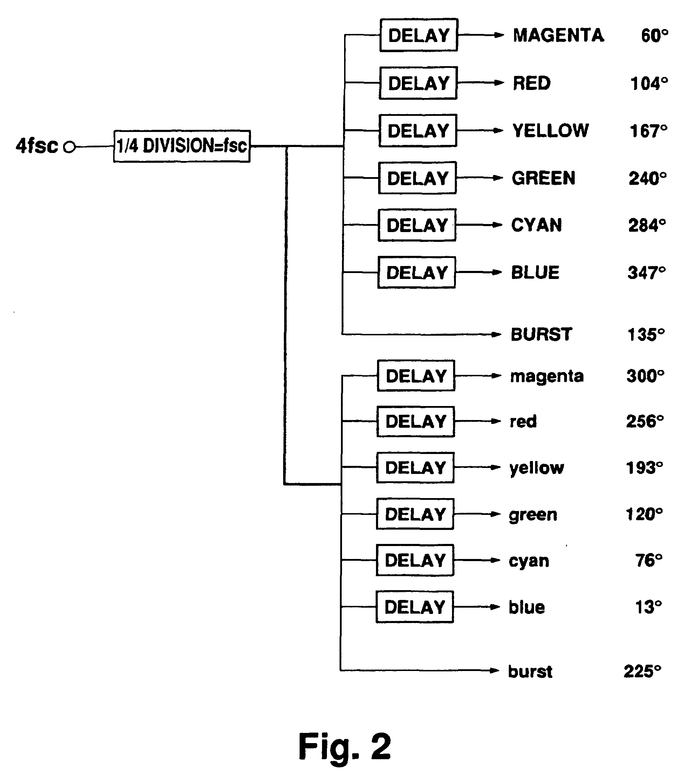

Although the circuit shown in Fig. 1 is adapted to an NTSC method, chrominance signals for a PAL method can be generated by a similar circuit. Fig. 2 shows a principle of the foregoing PAL type circuit. Also in this case, four times sub-carrier 4fsc corresponding to the frequency which is four times the frequency of the color burst signal is divided to 1/4 by a 1/4-divider. Thus, a plurality of divided output signals having phases differing by 45° are obtained. Moreover, a plurality of delay circuits are provided to correspond to the divided output signals so as to delay the divided output signals. Required colors can be thus obtained.

When magenta is required, signals having phases of 60° and 300° are generated, as shown in Fig. 2. The signal having the phase of 60° forms magenta with respect to a burst signal having a phase of 135°, while the signal having the phase of 300° forms magenta with respect to a burst signal having a phase of 225°. Since burst signals having different phases are, in the PAL method, transmitted at each horizontal period, signals having two phases are required for one color. Referring to Fig. 2, colors each having a character written in an uppercase are colors with respect to the burst signals each having the phase of 135°. Colors each having a character written in a lowercase are colors with respect to the burst signals each having the phase of 225°.

However, the circuit for generating chrominance signals shown in Fig. 2 suffers from a problem in that delay circuits for each corresponding colors must be provided and thus the number of the delay circuits cannot be reduced. Since the delay circuit usually requires a capacitor, an IC circuit cannot easily be formed. And, very importantly in industrial applications, the cost of the circuit cannot be reduced.

EP-A-0071 745 describes the use of a digital delay to generate individual phase shifted subcarriers having relative phases that are 45° apart.

### SUMMARY OF THE INVENTION

An object of the present invention is to reduce the number of delay circuits in a PAL type circuit for generating chrominance signals and enable the circuit to generate a plurality of chrominance signals.

In the present invention, a reference signal 4fsc having a frequency which is four times the frequency of a color burst signal is divided so that a plurality of divided signal having phases which differ from one another by 45° and frequency are fsc. One of the divided signals is synchronized with a delay signal obtained by delaying the reference signal and transmitted from the first latch circuit so that a first color burst signal is obtained. A second divided signal is synchronized with a delay signal obtained by delaying the reference signal and transmitted from the second latch circuit so that a second color burst signal is obtained. Therefore, the first and second color burst signals have phases which differ from their divided signals by a predetermined amount. The phase of the second divided signal is shifted from the phase of the color burst signals because the phases of the first and second color burst signals are shifted.

When the phase of the signal is shifted from that of the reference signal by, for example, 14° and the signal is used as a first color burst signal having a phase of 135°, chrominance signals having the phases substantially corresponding to green (G) "240°", cyan (Cy) "284°", magenta (Mg) "60°", and red (R) "104°" can be obtained from the second divided signals (G: 239° = 225° + 14°, Cy: 284° = 270° + 14°, Mg: 59° = 45° + 14°, and R: 104° = 90° + 14°).

As for yellow (Y1) "167°" and blue (B) "347°", divided signals each having a predetermined phase are synchronized with the second delay signal supplied from the second delay circuit and transmitted from the third latch circuit. Thus, the phases with respect to the first color burst signal are made to be predetermined phases corresponding to the foregoing colors. As for yellow (Y1), the phase of the divided signal having a phase of 180° is delayed by the third latch circuit by 28°. Thus, a chrominance signal having a phase of 166° (180° - 28° + 14°) can be obtained. As for blue (B), a divided signal having a phase of 360° is delayed by the third latch circuit. Thus, a chrominance signal having a phase of 346° (360° - 28° + 14°) can be obtained. Also chrominance signal green (g), cyan (cy), magenta (mg), red (r), yellow (y1), and blue (b) corresponding to the second color burst signal can be produced by a similar process to that for obtaining the chrominance signals corresponding to the first color burst signal.

At least any one of the first latch circuit, the second latch circuit, and the third latch circuit may be formed by a D-type flip-flop. In this case, a structure is formed in which a data input terminal of the flip-flop receives the divided signal transmitted from the divider and a clock input terminal receives the first or second delay signal from the first or second delay circuit.

Since the circuit for generating chrominance signals according to the present invention has the above-mentioned structure, chrominance signals in the six colors can be produced by the PAL type circuit by using two types of delay circuits. Moreover, the latch circuit may be a flip-flop circuit.

### BRIEF DESCRIPTION OF THE DRAWINGS

Fig. 1 is a diagram showing a conventional circuit (NTSC) for generating chrominance signals.
Fig. 2 is a diagram showing a conventional PAL type circuit for generating chrominance signals.
Fig. 3 is a waveform graph showing the operation of the circuit (NTSC) shown in Fig. 1.
Fig. 4 is a diagram showing a first embodiment of a circuit for generating chrominance signals according to the present invention.
Fig. 5 is a diagram showing the structure of a latch circuit.
Fig. 6 is a diagram showing phases of chrominance signals which are generated by the circuit for generating chrominance signals according to the present invention.
Figs. 7 and 8 are waveform graphs showing the operation of the circuit shown in Fig. 4.
Fig. 9 is a diagram showing a second embodiment of the circuit for generating chrominance signals according to the present invention.
Figs. 10 and 11 are waveform graphs showing the operation of the circuit shown in Fig. 9.
Fig. 12 is a diagram showing a third embodiment of the circuit for generating chrominance signals according to the present invention.
Figs. 13 and 14 are waveform graphs showing the operation of the circuit shown in Fig. 12.

### DESCRIPTION OF THE PREFERRED EMBODIMENTS

### [First Embodiment]

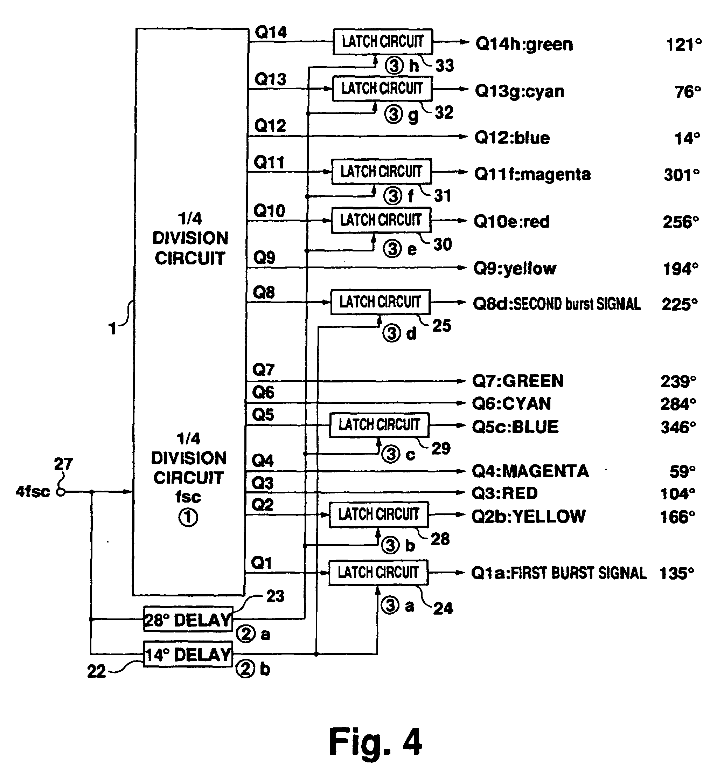

Fig. 4 shows a first embodiment of a circuit for generating chrominance signals according to the present invention. Reference numeral (1) represents a divider for dividing a four times sub-carrier 4fsc having a frequency which is four times the frequency of a color burst signal to thereby generate a plurality of chrominance signals having phases shifted in 45° steps. Reference numeral (22) represents a first delay circuit for delaying the phase of the signal 4fsc by 14°. Reference numeral (23) represents a second delay circuit for delaying the phase of the signal 4fsc by 28°. Reference numeral (24) represents a first latch circuit for synchronizing the divided output signal Q1 from the divider (1) with the signal delayed by the first delay circuit (22) to transmit a first burst signal Q1a. Reference numeral (25) represents a second latch circuit for synchronizing a divided output signal Q8 from the divider (1) with the signal delayed by the first delay circuit (22) to transmit a second burst signal Q8d.

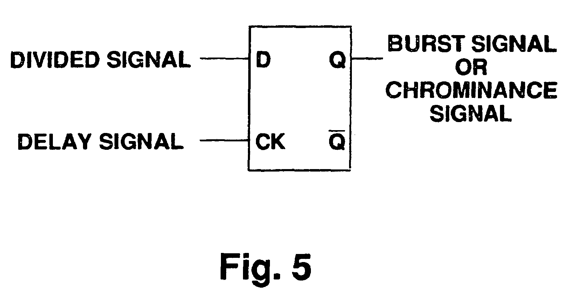

Since the divider (1) comprises two-stags of flip-flops similar to those shown in Fig. 1, its description is not repeated here. A latch circuit (24) comprises a D-type flip-flop as shown in Fig. 5. An output signal (divided signal) from the divider (1) is supplied to a terminal D of the latch circuit (24), while an output signal (a delayed signal) from the delay circuit (22) is supplied to a clock terminal of the latch circuit (24).

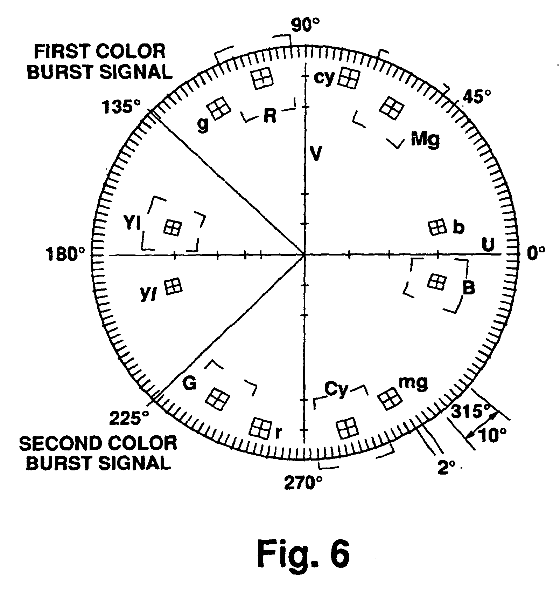

The relationships of phases of the chrominance signals are shown in Fig. 6. Referring to Fig. 6, color burst signals are generated at positions of 135° and 225° in each horizontal period. Referring to Fig. 6, phases 0°, 45°, 90°, 135°, 180°, 225°, 270° and 315° can be produced by the divider (1) shown in Fig. 4.

Six colors (magenta, red, yellow, green, cyan and blue) for use in frame display are indicated with angles from a reference quantity of the phase apart from eight axes of 0°, 45°, 90°, 135°, 180°, 225°, 270° and 315°, as follows:
Mg: 60° = 45° + 15°
mg: 300°= 315° - 15°
R: 104° = 90° + 14°
r: 256°= 270° - 14°
B: 347°= 360° - 13°
b: 13°= 0° + 13°
G: 240°= 225° + 15°
g: 120°= 135° - 15°
Cy: 284°= 270° + 14°
cy: 76°= 90° - 14°
Yl: 167°= 180° - 13°
yl: 193°= 180° + 13°

As can be understood from the foregoing list, G (green) and Mg (magenta) are positioned in such a manner that G is at a position advanced from 225° by 15° and also Mg is at a position advanced from 45° by 15°. Therefore, the foregoing colors can be adjusted by the same phase shifting circuit. For g (green) and mg (magenta), g is at a position delayed from 135° by 15° and also mg is at a position delayed from 315° by 15°. Therefore, the foregoing colors can be adjusted by the same phase shifting circuit.

Similarly, red (R and r) and cyan (Cy and cy) can be adjusted by a circuit for shifting the phase by 14°.

Also blue (B and b) and yellow (Y1 and y1) can be adjusted by a circuit for shifting the phase by 13°.

As described above, the three types of the phases exist in a very small region because they are ± 15°, ± 14° and ± 13°.

Accordingly, this embodiment is arranged in such a manner that an advancement of ± 14° is commonly employed so that the amount of phase shift is made equal. Since ± 14° is only slightly different from the other, the feeling of the original colors is maintained. Although the shift of the phase may be performed by using a special phase shifting circuit, in this embodiment the shift is performed by delaying the phase of the burst signal by 14°. As a result, colors can be produced. The chrominance signal is expressed by the difference in the phase from that of the burst signal. Specifically, the first delay circuit (22) for delaying the phase of a signal having a frequency of 4fsc by 14° produces + 14°, while the second delay circuit (23) for delaying the phase of a signal having a frequency of 4fsc by 28° produces - 28°. Thus, 14° is produced.

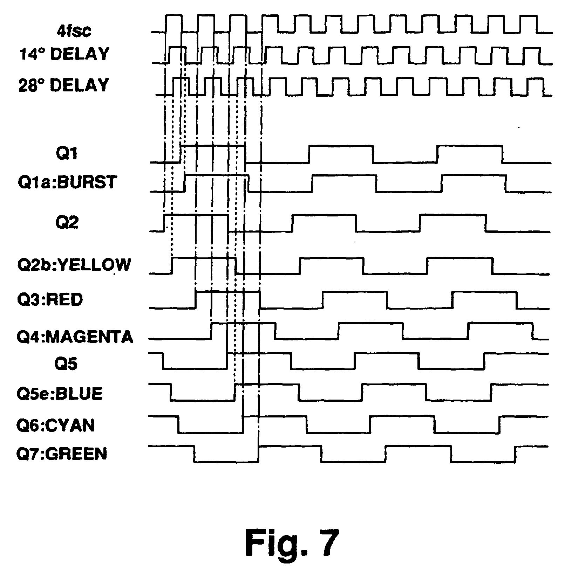

The foregoing process is shown in Fig. 4. A terminal (27) shown in Fig. 4 is supplied with a signal with frequency 4fsc. This signal is delayed by 14° by the first delay circuit (22), and then supplied as a clock signal to a first latch circuit (24) which generates a burst signal. The divider (1) generates signals Q1 to Q14 having different phases. The phase angles include eight angles, which are 0°, 45°, 90°, 135°, 180°, 225°, 270°, and 315°. The signal of frequency 4fsc is shown in Fig. 7 is transmitted from the terminal (27). The signal with frequency 4fsc is divided by four so that signals Q1 to Q14 each having a frequency of fsc are obtained. The signal Q1 is supplied to the first latch circuit (24) as a data signal. Therefore, a burst signal Qla shown in Fig. 7 can be obtained from the first latch circuit (24). Since the foregoing burst signal has a phase of 135°, the foregoing burst signal serves as a reference for the chrominance signals Q2 to Q7.

As a result of the above-mentioned shifts of the phases of the burst signals, signals Q3, Q4, Q6 and Q7 shown in Fig. 4 indicate RED, MAGENTA, CYAN, and GREEN as shown in Fig. 7. The quantities of the phases are as follows:
R: 104° = 90° + 14°
Mg: 59° = 45° + 14°
Cy: 284° = 270° + 14°
G: 239° = 225° + 14°

Since the normal values of BLUE and YELLOW are - 13°, the second delay circuit (23) produces - 14° to be used in place of -13°. Specifically, latch circuits (28) and (29) are used to produce - 28°. The first latch circuit (24) produces + 14° which is added to - 28°. Thus, - 14° is produced finally.

The signal Q2 shown in Fig. 7 is transmitted with a 28° DELAY clock so as to be formed into signal Q2b (YELLOW). Similarly, signal Q5 is formed into signal Q5c (BLUE).

Therefore, six colors corresponding to the burst of 135° are displayed by the signals Q2b, Q3, Q4, Q5c, Q6, and Q7 shown in Fig. 4. Thus, the circuit shown in Fig. 4 is able to generate the six colors using only two delay circuits.

Display corresponding to a burst of 225° will now be described. The burst signal of 225° is produced by the second latch circuit (25). Six colors corresponding to the foregoing burst signal are produced in accordance with signals Q9 to Q14. The difference from signals Q1 to Q7 lies in that two more latch circuits must be used. The basic operations are the same.

Since the phase of the burst signal is shifted by the second latch circuit (25), signals Q9 and Q12 shown in Fig. 4 indicate blue and yellow. The quantities of the shifts of the phases are as follows:
y1: 194° = 180° + 14°
b: 14° = 0° + 14°

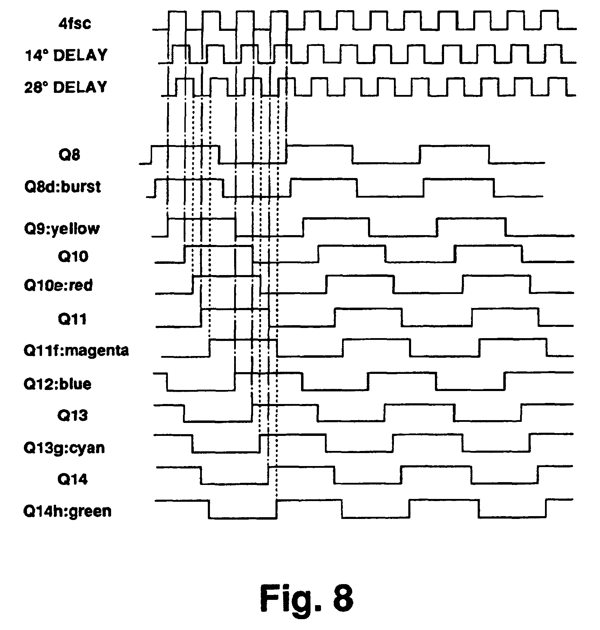

Although blue and yellow are shifted from their normal values by 1°, no practical problems arise. Since phases of the red, magenta, cyan, and green must be shifted by - 14°, latch circuits (30) to (33) are used. As a result, six colors corresponding to the burst of 225° are, as shown in Fig. 8, displayed by the signals Q9, Q10e, Q11f, Q12, Q13g, and Q14h shown in Fig. 4.

Therefore, the circuit shown in Fig. 4 is able to generate the six PAL colors using only two delay circuits.

### [Second Embodiment]

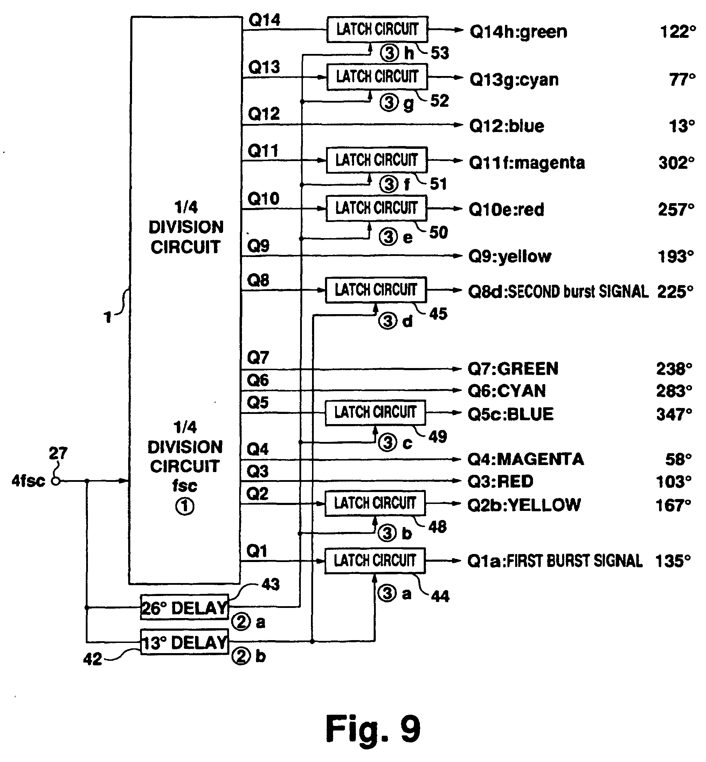

Fig. 9 shows a circuit for generating chrominance signals according to a second embodiment. This embodiment is different from the first embodiment in that a 13° delay circuit (42) and a 26° delay circuit (43) are provided to set the quantity of the shift of the phase from 4fsc to ± 13°. The quantity of the shift of the phase, which is ± 13°, is shifted from ± 15° by 2° and shifted from ± 14° by 1°. The foregoing quantities of shifts enable the original colors to be maintained.

Although a + 13° phase shift may be performed using a dedicated phase shifting circuit, the shift is here performed by delaying the phase of the burst signal by 13°. As a result, colors can be produced. The chrominance signal is expressed by the difference in the phase from that of the burst signal. Specifically, the first delay circuit (42) for delaying the phase of a signal with frequency 4fsc by 13° produces + 13°, while the second delay circuit (43) for delaying the phase of a signal with frequency 4fsc by 26° produces - 26°. Thus, ± 13° is produced.

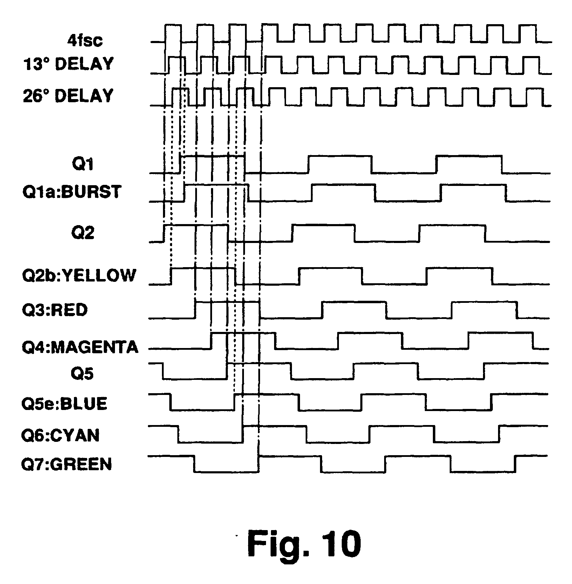

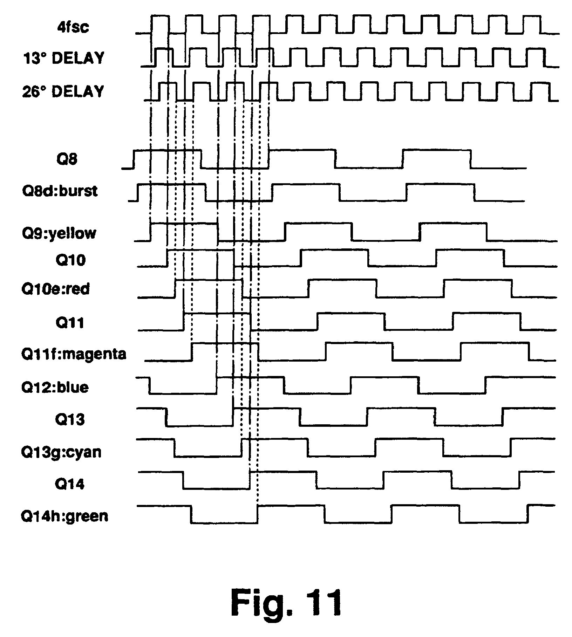

The foregoing process is shown in Fig. 9. A terminal (27) shown in Fig. 9 is supplied with a signal with frequency 4fsc. This signal is delayed by 13° by the first delay circuit (42), and then supplied as a clock signal to a first latch circuit (44) which generates a first burst signal. The divider (1) generates signals Q1 to Q14 having different phases. The phase angles include eight types of angles which are 0°, 45°, 90°, 135°, 180°, 225°, 270°, and 315°. The state of the generation is shown in Figs. 10 and 11. A signal with frequency 4fsc and shown in Fig. 10 is transmitted from the terminal (27). The signal with frequency 4fsc is divided by four so that signals Q1 to Q14, each having a frequency of fsc are obtained. Referring to Fig. 10, a signal 4fsc is obtained through the terminal (27). The 4fsc frequency signal is divided by four signals Q1 to Q14, each having the frequency of fsc can be obtained. As shown in Fig. 10, 4fsc indicates the waveform of the signal having the frequency of 4fsc, 13° DELAY indicates an output signal from the first delay circuit (42), and 26° DELAY indicates an output signal from the second delay circuit (43).

The signal Q1 is supplied to the first latch circuit (44) as a data signal. Therefore, a burst signal Q1a shown in Fig. 10 can be obtained from the first latch circuit (44). Since the foregoing burst signal has a phase of 135°, the foregoing burst signal serves as a reference for the chrominance signals Q2 to Q7.

As a result of the above-mentioned shifts of the phases of the burst signals, signals Q3, Q4, Q6 and Q7 shown in Fig. 9 as it is indicate RED, MAGENTA, CYAN and GREEN as shown in Fig. 10. The quantities of the phases are as follows:
R: 103° = 90° + 13° (normal value 104°)
Mg: 58° = 45° + 13° (normal value 59°)
Cy: 283° = 270° + 13° (normal value 284°)
G: 238° = 225° + 13° (normal value 240°)

Since the normal values of the quantity of the shifts of the phases of BLUE and YELLOW are - 13°, the second delay circuit (43) produces - 13°. Specifically, latch circuits (48) and (49) are used to produce - 26°. Since the quantity of the shift of the phase is - 13°, + 13° is relatively added to the signals Q2b and Q5c. Thus, a phase shift of - 13° is finally realized.

The signal Q2 shown in Fig. 10 is transmitted with a 26° DELAY clock signal so as to be formed into signal Q2b (YELLOW). Similarly, signal Q5 is formed into signal Q5c (BLUE).

Therefore, six colors corresponding to the burst of 135° are displayed by the signals Q2b, Q3, Q4, Q5c, Q6, and Q7 shown in Fig. 9. Thus, the circuit shown in Fig. 9 is able to generate six colors using only two delay circuits.

Display corresponding to a burst of 225° will now be described. The burst of 225° is produced by the second latch circuit (45). Six colors corresponding to the foregoing burst signal are produced in accordance with signals Q9 to Q14. The difference from signals Q1 to Q7 lies in that two more latch circuits must be used. The basic operations are the same.

Since the phase of the burst signal is shifted by the second latch circuit (45), signals Q9 and Q12 shown in Fig. 9 indicate yellow and blue. The quantities of the shifts of the phases are as follows:
y1: 193° = 180° + 13° (normal value 193°)
b: 13° = 0° + 13° (normal value 13°)

Blue (b) and yellow (y1) can be displayed as by their normal values. Since red, magenta, cyan, and green are formed as a result of the shift of - 13°, latch circuits (50) to (53) to each of which a signal is supplied from the second delay circuit (43) are used to display the foregoing colors. As a result, six colors corresponding to the burst of 225° are, as shown in Fig. 11, displayed by the signals Q9, Q10e, Q11f, Q12, Q13g, and Q14h shown in Fig. 9.

Therefore, the circuit shown in Fig. 9 is able to generate the six PAL colors using only two delay circuits.

Each of the latch circuits 44, 45, 48, 49, 50, 51, 52, and 53 shown in Fig. 9 has the same circuit structure as that according to the first embodiment and shown in Fig. 5.

### [Third Embodiment]

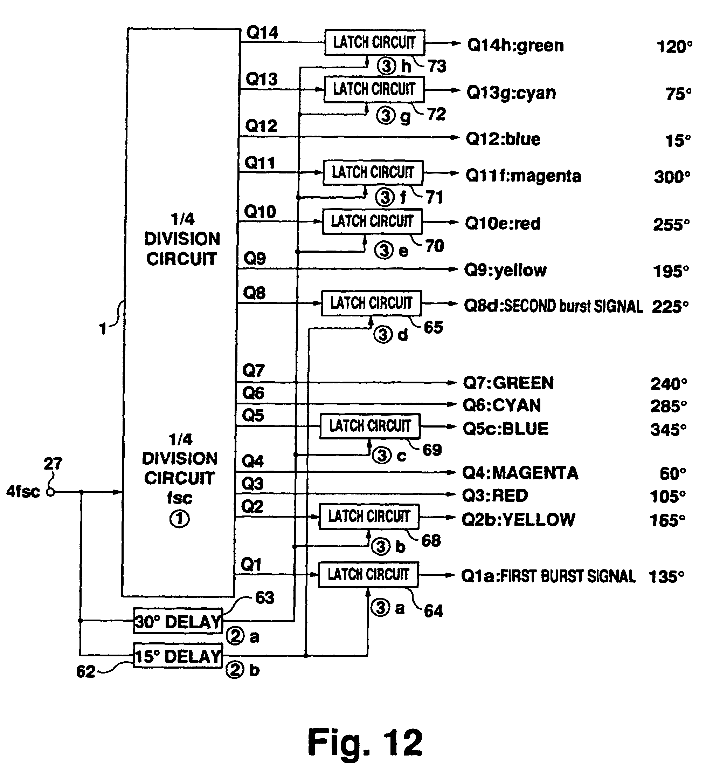

Fig. 12 shows a circuit for generating chrominance signals according to a third embodiment of the present invention. Reference numeral (62) represents a first delay circuit for delaying the phase of the signal having the frequency of 4fsc by 15°. Reference numeral (63) represents a second delay circuit for delaying the phase of the signal having the frequency of 4fsc by 30°. The structure shown in Fig. 12 is different from the first and second embodiments in that 15° delay circuit (62) and the 30° delay circuit (63) are provided and a process for shifting the phase of the divided signal by ± 15° is performed. The other structures are substantially the same as the circuit shown in Figs. 4 and 9. Each of latch circuits 64, 65, 69, 70, 71, 72, and 73 has the same structure as that shown in Fig. 5.

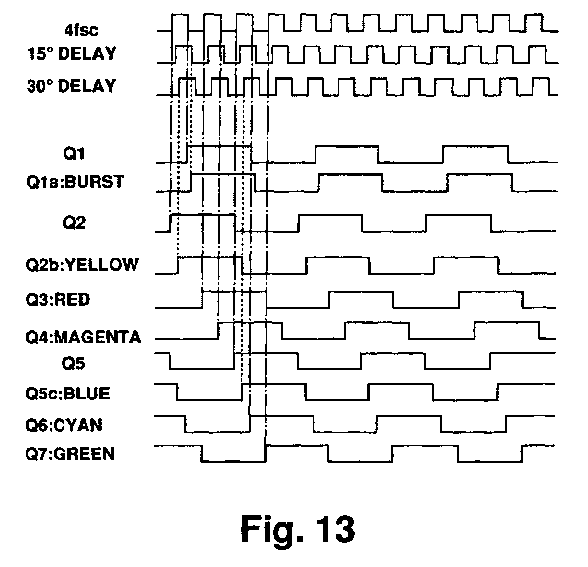

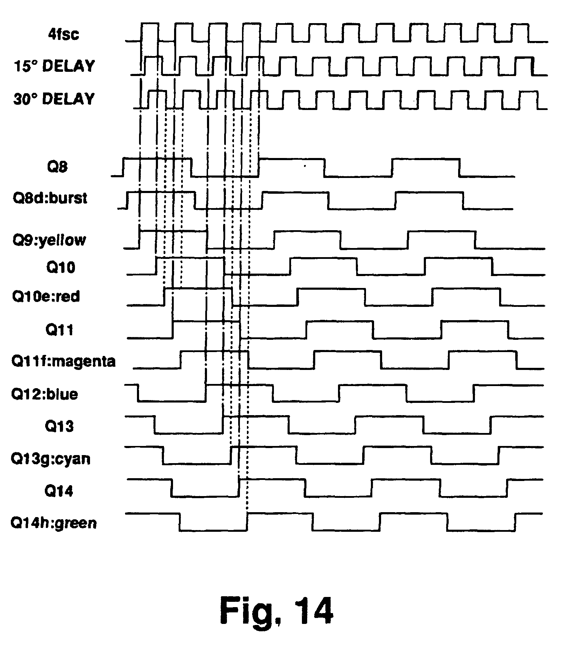

A terminal (27) shown in Fig. 12 is supplied with a 4fsc frequency signal. This signal is delayed by 15° by the first delay circuit (62), and then supplied as a clock signal to a first latch circuit (64) which generates a burst signal. The divider (1) generates signals Q1 to Q14 having different phases. The phase angles include eight angles, 0°, 45°, 90°, 135°, 180°, 225°, 270°, and 315°. The state of the generation is shown in Figs. 13 and 14. The 4fsc frequency signal shown in Fig. 13 is transmitted from the terminal (27). The signal having the frequency of 4fsc is divided by four so that signals Q1 to Q14 each having a frequency of fsc are obtained. Referring to Fig. 13, a signal 4fsc is obtained through the terminal (27). When this signal is divided by four, signals Q1 to Q14, each having a frequency of fsc can be obtained. As shown in Fig. 13, 4fsc indicates the waveform of the signal having the frequency of 4fsc, 15° DELAY indicates an output signal from the first delay circuit (62), and 30° DELAY indicates an output signal from the second delay circuit (63).

The signal Q1 is supplied to the first latch circuit (64) as a data signal. Therefore, a burst signal Qla shown in Fig. 13 can be obtained from the first latch circuit (64). Since the burst signal has a phase of 135°, the burst signal serves as a reference for the chrominance signals Q2 to Q7, similar to the above embodiments.

As a result of the above-mentioned shifts of the phases of the burst signals, signals Q3, Q4, Q6, and Q7 shown in Fig. 12 indicate RED, MAGENTA, CYAN, and GREEN as shown in Fig. 13. The quantities of the phases are as follows:
R: 105° = 90° + 15° (normal value 104°)
Mg: 60° = 45° + 15° (normal value 59°)
Cy: 285° = 270° + 15° (normal value 284°)
G: 240° = 225° + 15° (normal value 240°)

Since the normal values of the quantity of the shifts of the phases of BLUE and YELLOW are - 13°, the second delay circuit (63) produces - 15°, which is close to - 13°. Specifically, latch circuits (68) and (69) are used to produce - 30° each. Since the burst signal from the first latch circuit (4) is shifted by - 15°, BLUE and YELLOW are relatively added to the burst of + 15° so that - 15° is produced.

The signal Q2 shown in Fig. 13 is transmitted with a 30 ° DELAY clock so as to be formed into signal Q2b (YELLOW). Similarly, signal Q5 is formed into signal Q5c (BLUE).

Therefore, six colors corresponding to the burst of 135° are displayed by the signals Q2b, Q3, Q4, Q5c, Q6, and Q7 shown in Fig. 12. Thus, the circuit shown in Fig. 12 is able to generate six colors using only two delay circuits.

Display corresponding to a burst of 225° will now be described. The burst of 225° is produced by the second latch circuit (65). Six colors corresponding to the foregoing burst signal are produced in accordance with signals Q9 to Q14. The difference from signals Q1 to Q7 lies in the fact that two more latch circuits must be used. The basic operations are the same.

Since the phase of the burst signal is shifted by the second latch circuit (65), signals Q9 and Q12 shown in Fig. 12 indicate yellow and blue. The quantities of the shifts of the phases are as follows;
y1: 195° = 180° + 15° (normal value 193°)
b: 15° = 0° + 15° (normal value 13°)

Blue (b) and yellow (y1) can be displayed with values shifted from their normal values by 2°. Since red, magenta, cyan, and green are subjected to a process of subtraction by - 15°, latch circuits (70) to (73) to which a signal is supplied from the second delay circuit (63) are used to display the foregoing colors. As a result, six colors corresponding to the burst of 225° are, as shown in Fig. 14, displayed by the signals Q9, Q10e, Q11f, Q12, Q13g, and Q14h shown in Fig. 12.

Therefore, the circuit shown in Fig. 12 is able to generate the six PAL colors using only two delay circuits.

## Claims

1. A circuit for generating a plurality of chrominance signals, comprising:
a divider (1) for dividing a reference signal having a frequency four times the frequency of a color burst signal to generate a plurality of divided signals, wherein the plurality of divided signals are arranged to have phases shifted from one another in 45° steps;
**characterised by** a first delay circuit (22) for obtaining a first delay signal by delaying the phase of said reference signal by a first delay quantity;
a first latch circuit (24) for synchronising a first one of the plurality of divided signals transmitted from said divider (1) with said first delay signal transmitted from said first delay circuit (22) to generate a first color burst signal; and
a second latch circuit (25) for synchronising a second one of the plurality of divided signals transmitted from said divider (1) with said first delay signal transmitted from said first delay circuit (22) to generate a second color burst signal, wherein:
a number of the plurality of divided signals, which form a plurality of chrominance signals, are arranged to be transmitted with the first color burst signal and the second color burst signal.

2. A circuit for generating a plurality of chrominance signals according to claim 1, further comprising:
a second delay circuit (23) for obtaining a second delay signal by delaying the phase of said reference signal by a second delay quantity;
a third latch circuit (28) for synchronising a third one of the plurality of divided signals transmitted from said divider (1) with said second delay signal transmitted from said second delay circuit (23) to generate a first output signal, wherein:
a number of the plurality of divided signals, which form a plurality of chrominance signals , are arranged to be transmitted with the first color burst signal and the second color burst signal.

3. A circuit for generating a plurality of chrominance signals according to claim 1 or 2, wherein the first delay quantity performed by said first delay circuit (22) is about 14°.

4. A circuit for generating a plurality of chrominance signals according to claim 2, wherein the first delay quantity performed by said first delay circuit (22) is about 14°, and the second delay quantity performed by said second delay circuit (23) is about 28°.

5. A circuit for generating a plurality of chrominance signals according to claim 1 or 2, wherein the first delay quantity performed by said first delay circuit (22) is about 13°.

6. A circuit for generating a plurality of chrominance signals according to claim 2, wherein the first delay quantity performed by said first delay circuit (22) is about 13°, and the second delay quantity performed by said second delay circuit (23) is about 26°.

7. A circuit for generating a plurality of chrominance signals according to claim 1 or 2, wherein the first delay quantity performed by said first delay circuit (22) is about 15°, and the second delay quantity performed by said second delay circuit (23) is about 30°.

8. A circuit for generating a plurality of chrominance signals according to any one of claims 1 to 7, wherein said second output signal which is supplied to said second latch circuit (25) and said first output signal which is supplied to said first latch circuit (24) are divided signals having different phases.

9. A circuit for generating a plurality of chrominance signals according to claim 8, wherein said second output signal and said first output signal have phases which differ from each other by 90°.

10. A circuit for generating a plurality of chrominance signals according to any one of claims 1 to 9, wherein at least any one of said first latch circuit (24), said second latch circuit (25), and said third latch circuit (28) is a D-type flip-flop having a data input terminal which receives said divided signal transmitted from said divider and a clock input terminal which receives said first delay signal or said second delay signal supplied from said first delay circuit or said second delay circuit.

11. A circuit for generating a plurality of chrominance signals according to any one of claims 1 to 10, wherein the plurality of chrominance signals transmitted from said circuit for generating chrominance signals include one or more of green, cyan, magenta, or red.

## Patentansprüche

1. Schaltung zum Erzeugen einer Mehrzahl von Chrominanzsignalen, umfassend:
einen Teiler (1) zum Teilen eines Referenzsignals, welches eine Frequenz aufweist, die das Vierfache der Frequenz eines Farb-Burstsignals aufweist, um eine Mehrzahl von geteilten Signalen zu erzeugen, wobei die Mehrzahl von geteilten Signalen so angeordnet ist, dass die Signale Phasen aufweisen, die voneinander in Schritt von 45° verschoben sind;
**gekennzeichnet durch**:
eine erste Verzögerungsschaltung (22) zum Erhalten eines ersten Verzögerungssignals **durch** Verzögern der Phase des Referenzsignals um einen ersten Verzögerungsbetrag;
eine erste Latch-Schaltung (24) zum Synchronisieren eines ersten der Mehrzahl von geteilten Signalen, welche vom Teiler (1) übertragen sind, mit dem ersten Verzögerungssignal, das von der ersten Verzögerungsschaltung (22) übertragen ist, um ein erstes Farb-Burstsignal zu erzeugen; und
eine zweite Latch-Schaltung (25) zum Synchronisieren eines zweiten der Mehrzahl von geteilten Signalen, welche vom Teiler (1) übertragen sind, mit dem ersten Verzögerungssignal, das von der ersten Verzögerungsschaltung (22) übertragen ist, um ein zweites Farb-Burstsignal zu erzeugen, wobei:
eine Anzahl der Mehrzahl von geteilten Signalen, welche eine Mehrzahl von Chrominanzsignalen bilden, so angeordnet sind, dass sie mit dem ersten Farb-Burstsignal und dem zweiten Farb-Burstsignal übertragen werden.

2. Schaltung zum Erzeugen einer Mehrzahl von Chrominanzsignalen nach Anspruch 1, ferner umfassend:
eine zweite Verzögerungsschaltung (23) zum Erhalten eines zweiten Verzögerungssignals durch Verzögern der Phase des Referenzsignals um einen zweiten Verzögerungsbetrag;
eine dritte Latch-Schaltung (28) zum Synchronisieren eines dritten der Mehrzahl von geteilten Signalen, welche vom Teiler (1) übertragen sind, mit dem zweiten Verzögerungssignal, das von der zweiten Verzögerungsschaltung (23) übertragen ist, um ein erstes Ausgabesignal zu erzeugen, wobei:
eine Anzahl der Mehrzahl von geteilten Signalen, welche eine Mehrzahl von Chrominanzsignalen bilden, so angeordnet sind, dass sie mit dem ersten Farb-Burstsignal und dem zweiten Farb-Burstsignal übertragen werden.

3. Schaltung zum Erzeugen einer Mehrzahl von Chrominanzsignalen nach Anspruch 1 oder 2, wobei der erste Verzögerungsbetrag, der von der ersten Verzögerungsschaltung (22) angewendet wird, etwa 14° beträgt.

4. Schaltung zum Erzeugen einer Mehrzahl von Chrominanzsignalen nach Anspruch 2, wobei der erste Verzögerungsbetrag, der von der ersten Verzögerungsschaltung (22) angewendet wird, etwa 14° beträgt und der zweite Verzögerungsbetrag, der von der zweiten Verzögerungsschaltung (23) angewendet wird, etwa 28° beträgt.

5. Schaltung zum Erzeugen einer Mehrzahl von Chrominanzsignalen nach Anspruch 1 oder 2, wobei der erste Verzögerungsbetrag, der von der ersten Verzögerungsschaltung (22) angewendet wird, etwa 13° beträgt.

6. Schaltung zum Erzeugen einer Mehrzahl von Chrominanzsignalen nach Anspruch 2, wobei der erste Verzögerungsbetrag, der von der ersten Verzögerungsschaltung (22) angewendet wird, etwa 13° beträgt und der zweite Verzögerungsbetrag, der von der zweiten Verzögerungsschaltung (23) angewendet wird, etwa 26° beträgt.

7. Schaltung zum Erzeugen einer Mehrzahl von Chrominanzsignalen nach Anspruch 1 oder 2, wobei der erste Verzögerungsbetrag, der von der ersten Verzögerungsschaltung (22) angewendet wird, etwa 15° beträgt und der zweite Verzögerungsbetrag, der von der zweiten Verzögerungsschaltung (23) angewendet wird, etwa 30° beträgt.

8. Schaltung zum Erzeugen einer Mehrzahl von Chrominanzsignalen nach einem der Ansprüche 1 bis 7, wobei das zweite Ausgabesignal, das der zweiten Latch-Schaltung (25) zugeführt wird, und das erste Ausgabesignal, das der ersten Latch-Schaltung (24) zugeführt wird, geteilte Signale sind, die unterschiedliche Phasen aufweisen.

9. Schaltung zum Erzeugen einer Mehrzahl von Chrominanzsignalen nach Anspruch 8, wobei das zweite Ausgabesignal und das erste Ausgabesignal Phasen aufweisen, die sich voneinander um 90° unterscheiden.

10. Schaltung zum Erzeugen einer Mehrzahl von Chrominanzsignalen nach einem der Ansprüche 1 bis 9, wobei wenigstens eine beliebige der ersten Latch-Schaltung (24), der zweiten Latch-Schaltung (25) und der dritten Latch-Schaltung (28) ein D-Typ-Flipflop ist, das einen Dateneingabeanschluss aufweist, welcher das von dem Teiler übertragene geteilte Signal empfängt, und einen Takteingabeanschluss, welcher das von der ersten Verzögerungsschaltung oder der zweiten Verzögerungsschaltung übertragene erste Verzögerungssignal oder zweite Verzögerungssignal empfängt.

11. Schaltung zum Erzeugen einer Mehrzahl von Chrominanzsignalen nach einem der Ansprüche 1 bis 10, wobei die Mehrzahl von Chrominanzsignalen, die von der Schaltung zum Erzeugen von Chrominanzsignalen übertragen ist, eines oder mehrere von Grün, Cyan, Magenta oder Rot umfasst.

## Revendications

1. Circuit pour la génération de plusieurs signaux de chrominance, comportant :
un diviseur (1) destiné à diviser un signal de référence ayant une fréquence égale à quatre fois la fréquence d'un signal de synchronisation de chrominance pour générer une pluralité de signaux divisés, la pluralité de signaux divisés étant agencée de façon à avoir des phases décalées entre elles par pas de 45° ;
**caractérisé par** un premier circuit à retard (22) destiné à obtenir un premier signal de retard en retardant la phase dudit signal de référence d'une première grandeur de retard ;
un premier circuit à verrouillage (24) destiné à synchroniser un premier de la pluralité de signaux divisés transmis depuis ledit diviseur (1) avec ledit premier signal de retard transmis depuis le ledit premier circuit à retard (22) pour générer un premier signal de synchronisation de chrominance ; et
un second circuit à verrouillage (25) destiné à synchroniser un deuxième de la pluralité de signaux divisés transmis depuis ledit diviseur (1) avec ledit premier signal de retard transmis depuis ledit premier circuit à retard (22) pour générer un second signal de synchronisation de chrominance, dans lequel :
un certain nombre de la pluralité de signaux divisés, qui forment une pluralité de signaux de chrominance, sont agencés de façon à être transmis avec le premier signal de synchronisation de chrominance et le deuxième signal de synchronisation de chrominance.

2. Circuit pour la génération de plusieurs signaux de chrominance, selon la revendication 1, comportant en outre :
un deuxième circuit à retard (23) pour l'obtention d'un deuxième signal de retard en retardant la phase dudit signal de référence d'une deuxième grandeur de retard ;
un troisième circuit à verrouillage (28) destiné à synchroniser un troisième de la pluralité de signaux divisés transmis depuis ledit diviseur (1) avec ledit deuxième signal de retard transmis depuis ledit deuxième circuit à retard (23) pour générer un premier signal de sortie, dans lequel :
un certain nombre de la pluralité de signaux divisés, qui forment une pluralité de signaux de chrominance, sont agencés de façon à être transmis avec le premier signal de synchronisation de chrominance et le deuxième signal de synchronisation de chrominance.

3. Circuit pour la génération de plusieurs signaux de chrominance, selon la revendication 1 ou 2, dans lequel la première grandeur de retard produite par ledit premier circuit à retard (22) est d'environ 14°.

4. Circuit pour la génération de plusieurs signaux de chrominance, selon la revendication 2, dans lequel la première quantité de retard produite par ledit premier circuit à retard (22) est d'environ 14°, et la deuxième quantité de retard produite par ledit deuxième circuit à retard (23) est d'environ 28°.

5. Circuit pour la génération de plusieurs signaux de chrominance, selon la revendication 1 ou 2, dans lequel la première grandeur de retard produite par ledit premier circuit à retard (22) est d'environ 13°.

6. Circuit pour la génération de plusieurs signaux de chrominance, selon la revendication 2, dans lequel la première grandeur de retard produite par ledit premier circuit à retard (22) est d'environ 13° et la deuxième grandeur de retard produite par ledit deuxième circuit à retard (23) est d'environ 26°.

7. Circuit pour la génération de plusieurs signaux de chrominance, selon la revendication 1 ou 2, dans lequel la première grandeur de retard produite par ledit premier circuit à retard (22) est d'environ 15°, et la deuxième grandeur de retard produite par ledit deuxième circuit à retard (23) est d'environ 30°.

8. Circuit pour la génération de plusieurs signaux de chrominance, selon l'une quelconque des revendications 1 à 7, dans lequel ledit deuxième signal de sortie qui est appliqué audit deuxième circuit à verrouillage (25) et ledit premier signal de sortie qui est appliqué audit premier circuit à verrouillage (24) sont des signaux divisés ayant des phases différentes.

9. Circuit pour la génération de plusieurs signaux de chrominance, selon la revendication 8, dans lequel ledit deuxième signal de sortie et ledit premier signal de sortie ont des phases qui diffèrent entre elles de 90°.

10. Circuit pour la génération de plusieurs signaux de chrominance, selon l'une quelconque des revendications 1 à 9, dans lequel au moins l'un quelconque dudit premier circuit à verrouillage (24), dudit deuxième circuit à verrouillage (25) et dudit troisième circuit à verrouillage (28) est une bascule de type D ayant une borne d'entrée de données qui reçoit ledit signal divisé transmis depuis ledit diviseur et une borne d'entrée d'horloge qui reçoit ledit premier signal de retard ou ledit deuxième signal de retard fourni depuis ledit premier circuit à retard ou ledit deuxième circuit à retard.

11. Circuit pour la génération de plusieurs signaux de chrominance, selon l'une quelconque des revendications 1 à 10, dans lequel les multiples signaux de chrominance transmis depuis ledit circuit pour la génération de signaux de chrominance comprennent un ou plusieurs du vert, du cyan, du magenta ou du rouge.
